# EUROPEAN PATENT SPECIFICATION

(11) **EP 1 314 661 B1**
(45) Date of publication and mention of the grant of the patent: **30.07.2003**
(21) Application number: 01830719.9
(22) Date of filing: 21.11.2001
(51) Int. Cl.: B65G 35/08

(54) **An apparatus for entrained transfer along a processing line for marble slabs, tiles and the like**
Fördervorrichtung für Marmor Platten, Fliesen und dergleichen entlang einer Verarbeitungslinie
Dispositif de transport de plaques de marbre, de carreaux et similaires le long d'une chaîne de travail

(43) Date of publication of application: 28.05.2003
(73) Proprietor: Officina C.M.C. S.r.l., 42010 S. Antonino di Casalgrande (Reggio Emilia) (IT)
(72) Inventor: Valentini, Alessandro, 42010 Villalunga-Casalgrande (IT)
(74) Representative: Gotra, Stefano

(56) References cited:
- DE-C- 420 959
- GB-A- 1 490 878

## Description

Specifically, though not exclusively, the invention is usefully applied in the field of lines for decorating ceramic tiles.

The use of belt or chain conveyors in usual tile decorating lines is well known, the tiles being decorated with liquid or solid (granules or powders) glaze on flat screen systems (requiring the belt to be stopped for the operation to be carried out) or continuous systems (where the glazing is done on rotary machines to avoid the need for stopping the line).

Obviously, where more than one colour is to be used, more than one passage below several decorating machines becomes necessary, with the consequent need to make a fresh tile-centring operation for each passage. This is done using a centring system which, for each machine, identifies the exact position of each single tile with respect to the next machine in line, establishing at the same time the reference position of the tile for correct execution of the decoration (with a correct positioning of the tile beneath the decorating machine, or with a centring of the rotary decorating cylinder in rotary machines which function with no stoppage of the tile movement).

The above-described operative systems are poorly suited to multi-colour decoration (i.e. those which necessitate a number of passages equal to a number of colours), especially for those tiles or slabs which have only been partially pressed and still await final pressing. These items will undergo a final pressing after the decoration operations have been completed (generally dry). These tiles or slabs, owing to the low forming pressure (usually about 1/8 of the usual values for single pressing), are still fairly loose, making their transport on belts or chains unsuitable, and also making any gripping and positioning of them below the various decorating machines impossible (for example by lateral gripping).

In GB-A-1 490 878 an attempt has been made to obviate these drawbacks.

The main aim of the present invention is to provide an apparatus for entrained transfer along a processing line for marble slabs, tiles and the like, which obviates the above-cited drawbacks and limits in the prior art, in particular reducing the stress the slabs or tiles undergo during their transport on chains or belts owing to impacts and shifts which are necessary so that the tiles or slabs can be correctly centred below various machines, as well as sliding on chains or belts which is necessary each time the tiles or slabs have to be neared or distanced from each other.

A further aim of the present invention is to combine rotary decorating machines (which have no need to stop the transport motion of the objects) and flat decorating machines (where the line has to be stopped for each object) along a single line.

A further aim of the invention is to provide an apparatus which can be inserted into any line with no consequent line logic problems, i.e. harmonisation of rhythms between two units or work stations (for example between the press carrying out the first pressing and the press making the final pressing operation).

The invention has the advantage of eliminating the need for centring the tiles before they reach each decorating machine.

A further advantage of the invention is that it considerably reduces preparation times for adjusting the machines in the line at production start-up, with respect to the prior art.

These aims and advantages and others besides are all attained by the invention as it is characterised in the appended claims.

Further characteristics and advantages of the present invention will better emerge from the detailed description that follows of a preferred but non-exclusive embodiment of the invention, illustrated purely by way of non-limiting examples in the accompanying figures of the drawings, in which:

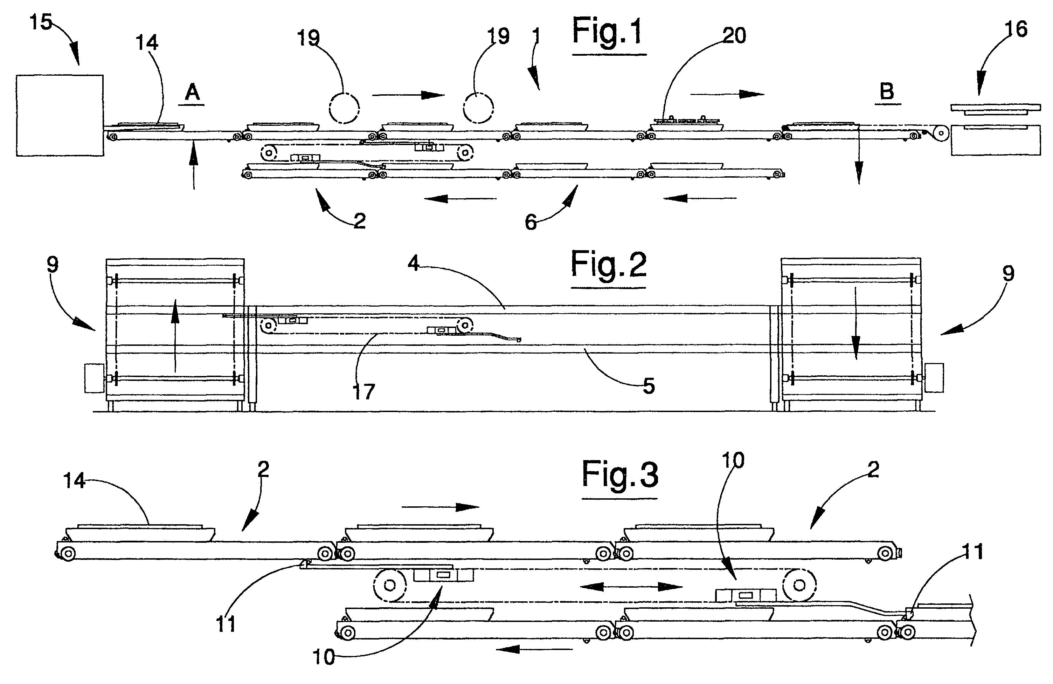

figure 1 is a schematic lateral view of the invention in vertical elevation;
figure 2 is the same view as figure 1 but with some parts removed better to evidence others;
figure 3 shows, in enlarged scale, a part of figure 1;

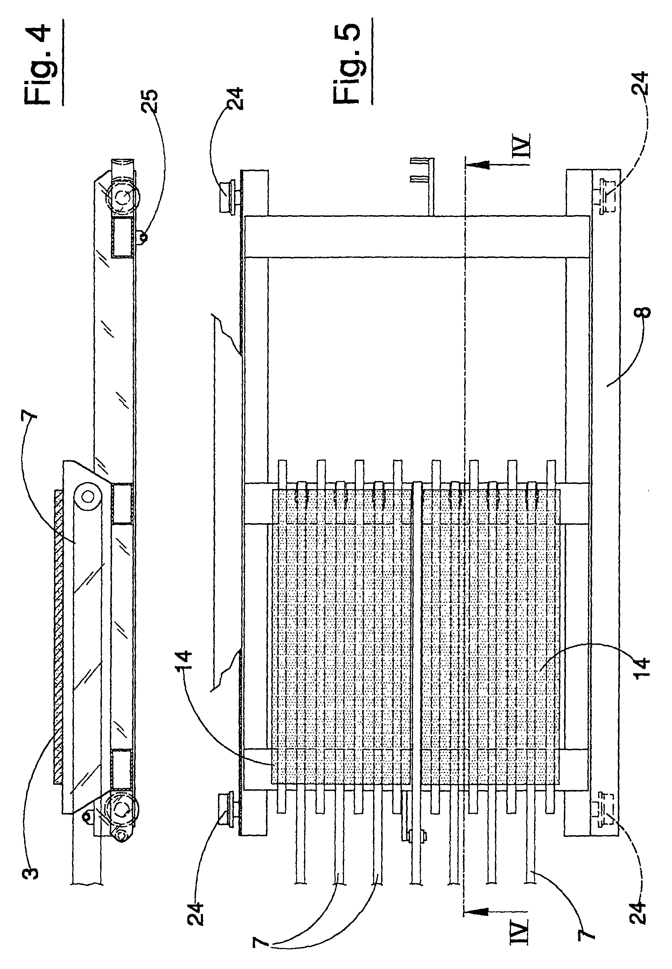

figure 4 shows a section according to line IV-IV of figure 5;
figure 5 shows, in greater enlarged detail, a plan view from above of a part of figure 1;
figure 6 shows, in enlarged scale, a lateral view from the right of figure 4;
figure 7 shows, in enlarged scale, a lateral view from the right of figure 2;
figure 8 shows, in enlarged scale and in the same view as figure 1, a detail illustrating a coupling stage of two trucks;
figure 9 shows the same view as figure 8 illustrating a coupling stage of two trucks;
figure 10 shows, in enlarged scale, a stage of a coupling method for engaging a truck for moving the trucks along the first guides (4);
figure 11 shows, in enlarged scale, a further stage of a coupling method for engaging a truck for moving the trucks along the first guides (4).

With reference to the above-mentioned figures, 1 denotes in its entirety a work line for tiles 14 which, in the illustrated embodiment, is a line for decorating located between a first press 15, at which a first, partial and low-pressure press of the tiles is made, and a second press 16, at which the tiles 14, after having received several decorations, are subjected to a further press, which gives them their definitive form (before firing).

On the work line 1, the transfer of the tiles 14 is done by means of a plurality of mobile elements or trucks 2, each of which can receive at least one slab or tile 3.

The trucks 2 are provided with means for hooking-up, which enable the trucks to be hooked-up consecutively to form a train.

Along the line 1, a predetermined number of trucks 2, consecutively hooked-up one to another to form a train, are guided by first guides 4. The first guides 4 occupy the central part of the line 1, where rotary decorating machines 19 and a flat decorating machine 20 are located.

The trucks 2 are in a closed circuit in which a single truck (in position B) is removed from the line and a new truck (in position A) is introduced at the start of the line.

For this recycling of the trucks 2, the following system is provided:
- second guides 5 for guiding a predetermined number of the trucks 2 (equal to the number of hooked-up trucks travelling along the first guides 4) hooked-up to each other along an empty return line 6;
- means, located at position B, for translating at least one truck 2 from the first guides 4 to the second guides 5 and similar means, operating in position A, for contemporaneously translating at least one other truck 2 from the second guides 5 to the first guides 4.

The first guides 4 and the second guides 5 are of the same length so that they can receive the same number of entrained trucks 2. They are also parallel, identical, one is situated above another at a predetermined distance, and are constituted by pairs of rails 8 facing each other at constant distances and destined to receive the wheels 24 of the trucks 2.

The means for translating at least one truck 2 from the first guides 4 to the second guides 5 and for contemporaneously translating at least one truck 2 from the second guides 5 to the first guides 4 comprise vertical translators 9, which translate and position vertically pairs of tracts 18 of rails 8, each of which pairs of tracts 18 is of a right length to receive at least one truck 2.

The vertical translators 9 are identical one to another and are destined to translate the pairs of tracts 18 of rails 8 so as to bring the single tracts 18 into positions which in effect make them prolongations of the rails 8 either of the first guides 4 or the second guides 5.

In particular each vertical translator 9 comprises two pairs of ring-wound chains 12 winding about geared cogs 13, the chains 12 being arranged one facing another and having, fixed on one branch each thereof, the pairs of tracts 18 of rails 8. The tracts 18 are fixed on the respective chains 12 at a distance which is exactly equal to the distance between the pairs of rails 8 constituting the first guides 4 and the second guides 5.

This distance corresponds to a number of steps of the chain 12 which is equal to the number of gears on the cogs 13 on which a single chain 12 winds. This makes positioning the pairs of tracts 18 on the corresponding rails 8 of the first guides 4 and the second guides 5 very simple.

The coupling and releasing of the trucks 2 to and from the trains of trucks 2 on the first guides 4 and the second guides 5 is automatically done by effect of the vertical translations performed by the translators 9 of single trucks 2 from the first guides 4 to the second guides 5, and vice versa.

For this purpose the trucks 2 are provided with special coupling devices comprising, respectively, on the front end (or back end) of the truck 2, a pivot 22 having an axis which is perpendicular to the longitudinal axis of the truck 2, and on the other end, in the advancing direction, on the back end (or front end), a seating 23 for coupling with the pivot 22 of a contiguous truck 2.

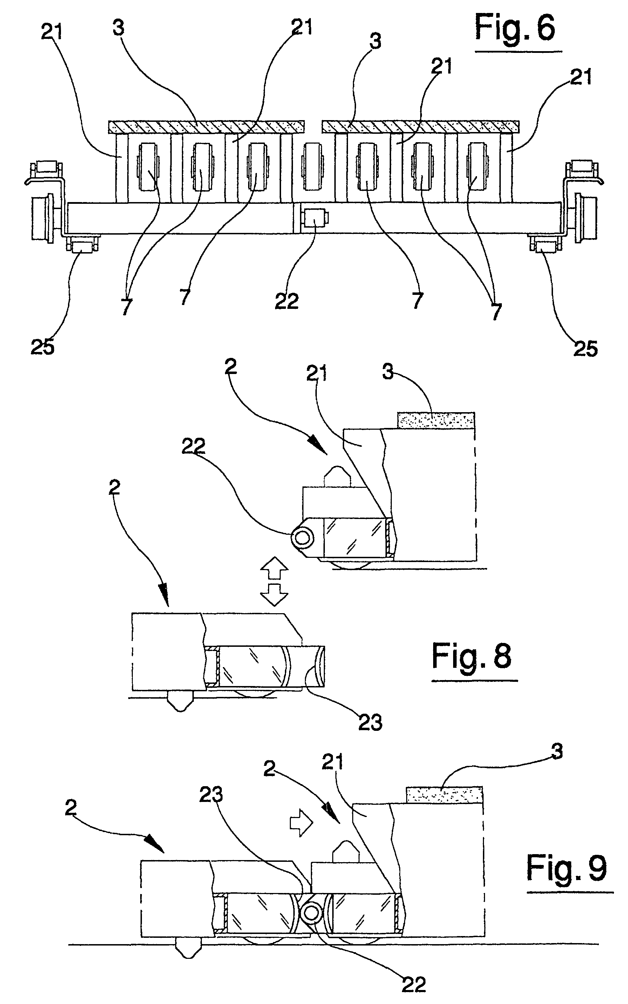

The seating 23 is symmetrically shaped with respect to a median plane containing the axis of the pivot 22 positioned on the opposite side of the truck 2, and exhibits a conformation which diverges externalwise, with the minimum section located at the median plane. The minimum section is of such a size as to couple snugly with a pivot 22. In figures 8 and 9 the free and snugly-coupled configurations are illustrated. Passage from one configuration to the other is achieved with a simple relative translation in a vertical direction between the two trucks 2 which, obviously, must previously be centred so that the vertical projection of the pivot 22 of one truck 2 falls inside the seating 23 of another truck 2.

The centring operation is carried out using the same means which move the trains of trucks 2 on the first guides 4 and the second guides 5.

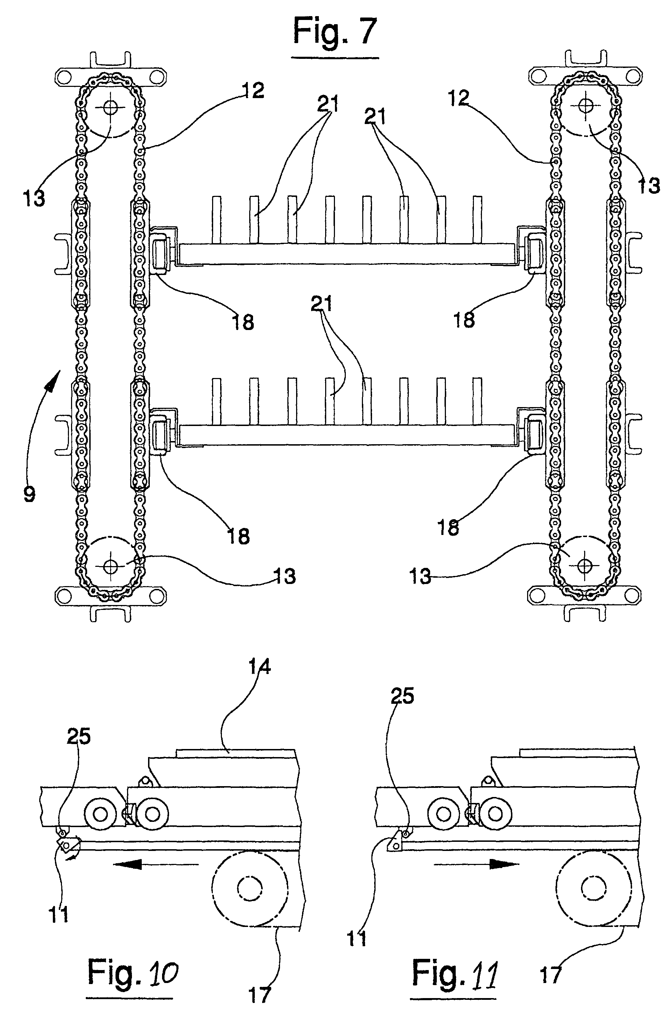

The described means are designed to operate contemporaneously on at least one truck 2 of the first train of trucks 2 on the first guides 4 and at least one truck 2 of the second train of trucks 2 on the second guides 5, so that on the two guides 4 and 5 synchronised movements of equal entity are produced in opposite directions. The means comprise mobile groups 10 equipped with ratchets 11 for hooking the trucks 2 to two opposite and parallel branches of a ring-wound belt 17 commanded to move with alternating motion. The functioning of the ratchets is illustrated clearly in figures 10 and 11.

The ratchets 11 interact with strikers 25 provided on each truck 2 and are predisposed to engage with the strikers 25 only during the active run of the their alternating motion, corresponding to movement by a single step, synchronous and in opposite directions, of the first train and the second train of trucks 2 along the first and second guides 4 and 5, as well as along the corresponding pairs of tracts 18 of rails 8 aligned thereto.

The synchronous displacement by a single step in opposite directions of the two trains along the first and second guides 4 and 5 is not accidental, but is exactly measured in terms of the length of the trucks 2. More precisely, the entity of this movement is equal to the distance, measured along the longitudinal axis of the truck 2, between the axis of the pivot 22 and the median plane of the seating 23 present on the two opposite ends of the truck 2.

Each truck 2 (the trucks 2 are identical to one another) is provided with a rest plane for receiving at least one slab or tile 3 which is identified by the free ends of a plurality of parallel elements 21 predisposed and distanced so as to identify channels which are parallel to the longitudinal axis of the truck 2, between which channels belt conveyors 7 are freely insertable and disinsertable.

Thanks to this conformation the line 1 is perfectly insertable in a normal line for tile conveying, as it can be joined up there-with with no problems.

The insertion of a new truck at the start of the line 1 in position A coincides with bringing a truck up from the second guides 5 and into line with the first guides 4. In this position of alignment with the first guides 4 the parallel elements 21 are inserted between the belt conveyors 7 and their upper ends project superiorly with respect to the rest plane identified by the upper branches of the belt conveyors 7.

During the raising movement the tile (or tiles) initially present on the upper branches of the belt conveyors 7 is raised there-from and loaded onto the ends of the parallel elements 21. Thus the tile is loaded onto the truck 2 positioned at the start of the line 1. From this moment onwards up until its unloading, which will occur in position B, the tile 14 is moved intermittently on the line 1.

Contemporaneously and perfectly synchronically with the above movement, in position B one tile 14 (or more than one tile) is unloaded from a truck 2 on which the tile was housed during its run on line 1. In this case the lowering of the truck 2 between the parallel elements 21 of which the belt conveyor 7 is inserted, produces a simple depositing of the tile 14 on the upper branch of the belt conveyor 7, so that the tile can be freely transferred to a next work station or conveyor line.

In the illustrated embodiment the belt conveyors 7 are fixed and in position A connected the first press 15 to the line, while in position B they connect the line 1 to the second press 16.

The rotary decorating machines 19 are located along the line 1 at a reciprocal mutual distance which in a whole multiple of a step as above-defined, and thus is measured in proportion to the axial length of a truck 2, and corresponds exactly to a single advancement of the train of trucks 2 on the line 1.

In turn the trucks 2 are made of a size which means that the rest plane for the tiles, defined by the upper ends of the parallel elements 21, occupies no more than half the total length of a single truck 2.

This, in combination with the fact that the flat decorating machine 20 is located in line at a distance from the closest rotary decorating machine which is a whole multiple of a half-step, means that on a same line 1 both continuous rotary (during the movement of the train) and flat (when the tiles 2 are stationary) operations can be carried out.

The rotary decorating machines begin functioning during the advancement movement by one step of the train of trucks 2, while the flat decorating machine begins functioning during a pause in the step movement of the train of trucks 2. During this stop time the rotary machines are stationary and facing the half of the truck 2 area which is not occupied by the parallel elements 21.

Naturally a staggering is necessary between the machines and the line; accordingly the first machine is located at a predetermined distance from the start of the line itself.

Among other things, the invention has the advantage of being insertable with no difficulties in any tile production line.

## Claims

1. An apparatus for entrained transfer along a processing line for marble slabs, tiles and the like, the line being constituted by an ordered succession of work stations located at a predetermined distance one from another, comprising:
a plurality of trucks (2), each of which can receive at least one tile (3); means for coupling the trucks (2) enabling a truck (2) consecutively to be coupled with another truck (2) to form a train of trucks (2);
first guides (4) for guiding a predetermined number of the trucks (2) coupled one to another to form a train of trucks (2) along the line (1);
second guides (5) for guiding a predetermined number of the trucks coupled one to another to form a second train of trucks (2) along a return line (6) of the trucks (2);
means for translating at least one truck (2) from the first guides (4) to the second guides (5) and for translating at least one truck (2) from the second guides (5) to the first guides (4);
means for moving the trucks (2) for operating contemporaneously on at least one truck (2) of the first train of trucks (2) and at least one truck (2) of the second train of trucks (2) in order to produce, along the first guide (4) and the second guide (5), synchronised displacements of equal entity and in opposite directions.

2. The apparatus of claim 1, **characterised in that** each truck (2) is provided with a rest plane for receiving at least one tile (3), which rest plane is identified by free ends of a plurality of parallel elements (21) predisposed and distanced so as to identify channels which are parallel to a longitudinal axis of the truck (2),into which channels belt conveyors (7) can be freely inserted and disinserted.

3. The apparatus of claim 2, **characterised in that** the means for coupling comprise, on one of a front or rear end of the truck (2), a pivot (22) having an axis which is perpendicular to the longitudinal axis of the truck (2), and on an opposite end, front or rear of the truck, a seating (23) for a snug coupling with the pivot (22) of a contiguous truck (2); the seating (23) being symmetrical with respect to a median plane containing the longitudinal axis of the pivot (22) and exhibiting a conformation which diverges in an externalwise direction, a minimum section thereof being located at the median plane; the minimum section thereof being of a size to realise a snug coupling with a pivot (22).

4. The apparatus of claim 3, **characterised in that** the first guides (4) and the second guides (5) are of identical length so that an identical number of trucks (2) forming trains can be received.

5. The apparatus of claim 3 or 4, **characterised in that** the first guides (4) and the second guides (5) are parallel and arranged one above another at a predetermined reciprocal distance.

6. The apparatus of claim 5, **characterised in that** the first guides (4) and the second guides (5) are identical and constituted by a pair of rails (8) set at a constant reciprocal distance, which rails are designed to receive wheels (24) of the trucks (2).

7. The apparatus of claim 6, **characterised in that** the means for translating at least one truck (2) from the first guides (4) to the second guides (5) and at least one truck (2) from the second guides (5) to the first guides (4) comprise vertical translators (9) which can vertically translate and position pairs of tracts (18) of rails (8), each of which is proportioned so as to receive at least one truck (2); the vertical translators (9) vertically translating and positioning pairs of tracts (18) of rails (8) so as to bring the tracts (18) into positions where the tracts (18) become prolongations of the first guides (4) and the second guides (5).

8. The apparatus of claim 7, **characterised in that** each vertical translator (9) comprises two pairs of ring-wound chains (12) winding about cogwheels (13) located one facing another, with the pairs of tracts (18) of rails (8) fixed on the chains (12).

9. The apparatus of claim 8, **characterised in that** the pairs of tracts (18) of rails (8) are fixed on the respective pairs of chains (12) at a distance which is exactly equal to a distance between the first guides (4) and the second guides (5) and which corresponds to a number of steps of the chains (12) which is equal to a number of cogs on the cog wheels (13) about which a chain (12) of the chains is ring-wound.

10. The apparatus of any one of claims 7, 8 or 9, **characterised in that** the means for moving the trucks (2) and able to act contemporaneously on at least one truck (2) of the first train and at least one truck (2) of the second train in order to make synchronised displacements along the first guides (4) and second guides (5), which synchronised displacements are of equal entity and in opposite directions, comprise two mobile groups (10) equipped with ratchets (11) for coupling up trucks (2) and constrained to two parallel opposite branches of a ring-wound belt which is moved on command alternatingly.

11. The apparatus of claim 10, **characterised in that** the ratchets (11) are designed to interact with strikers (25) provided on the trucks (2); the ratchets (11) being predisposed to engage with the strikers (25) only during an active run of alternating motion of the ratchets (11), corresponding to a displacement of one step, synchronised and in opposite directions, of the first train and second train of trucks (2) along the first guides (4) and the second guides (5) and the corresponding pairs of tracts (18) of rails (8) aligned thereto.

## Patentansprüche

1. Fördervorrichtung für Marmorplatten, Fliesen und dergleichen entlang einer Verarbeitungslinie, wobei die Linie aus einer geordneten Folge von Arbeitsstationen besteht, die in einem bestimmten Abstand voneinander angeordnet sind, enthaltend:
- eine Anzahl von Förderwagen (2), von denen jeder wenigstens eine Fliese (3) aufnehmen kann; wobei Mittel zum Verbinden der Förderwagen (2) es den Förderwagen (2) ermöglichen, aufeinanderfolgend mit einem anderen Förderwagen (2) verbunden zu werden, um einen Zug von Förderwagen (2) zu bilden;
- erste Führungen (4) zum Führen einer bestimmten Zahl von Förderwagen (2), die miteinander verbunden sind, um einen Zug von Förderwagen (2) entlang der Bahn (1) zu bilden;
- zweite Führungen (5) zum Führen einer bestimmten Zahl von Förderwagen, die miteinander verbunden sind, um einen zweiten Zug von Förderwagen (2) entlang einer Rücklaufbahn (6) der Förderwagen (2) zu bilden;
- Mittel zum Versetzen von wenigstens einem Förderwagen (2) von den ersten Führungen (4) zu den zweiten Führungen (5) und zum Versetzen von wenigstens einem Förderwagen (2) von den zweiten Führungen (5) zu den ersten Führungen (4);
- Mittel zum Bewegen der Förderwagen (2) zum gleichzeitigen Betätigen von wenigstens einem Förderwagen (2) des ersten Zuges von Förderwagen (2) und von wenigstens einem Förderwagen (2) des zweiten Zuges von Förderwagen (2), um entlang der ersten Führung (4) und der zweiten Führung (5) synchronisierte Verschiebungen gleichen Umfangs und in entgegengesetzten Richtungen zu bewirken.

2. Vorrichtung nach Patentanspruch 1, **dadurch gekennzeichnet, dass** jeder Förderwagen (2) mit einer Auflagefläche zur Aufnahme von wenigstens einer Fliese (3) versehen ist, welche Auflagefläche durch die freien Enden einer Anzahl von parallelen Elementen (21) beschrieben ist, die so angeordnet sind und einen Abstand voneinander haben, dass Kanäle beschrieben werden, welche parallel zu einer Längsachse des Förderwagens (2) verlaufen, und in welche Kanäle Bandförderer (7) frei eintreten und austreten können.

3. Vorrichtung nach Patentanspruch 2, **dadurch gekennzeichnet, dass** die Mittel zum Verbinden an einem vorderen oder hinteren Ende des Förderwagens (2) einen Zapfen (22) mit einer Achse enthalten, welche lotrecht zu der Längsachse des Förderwagens (2) verläuft, und an einem entgegengesetzten, vorderen oder hinteren Ende des Förderwagens einen Sitz (23) zur passrechten Verbindung mit dem Zapfen (22) eines angrenzenden Förderwagens (2); wobei der Sitz (23) symmetrisch im Verhältnis zu einer mittleren Ebene angeordnet ist, welche die Längsachse des Zapfens (22) enthält, und der eine Gestaltung aufweist, welche nach aussen hin divergiert, wobei der schmalste Abschnitt auf der mittleren Ebene angeordnet ist; wobei der schmalste Abschnitt desselben von einer entsprechenden Grösse ist, um eine passrechte Verbindung mit einem Zapfen (22) herzustellen.

4. Vorrichtung nach Patentanspruch 3, **dadurch gekennzeichnet, dass** die ersten Führungen (4) und die zweiten Führungen (5) von der gleichen Länge sind, so dass die gleiche Anzahl von die Züge bildenden Förderwagen (2) aufgenommen werden kann.

5. Vorrichtung nach Patentanspruch 3 oder 4, **dadurch gekennzeichnet, dass** die ersten Führungen (4) und die zweiten Führungen (5) parallel zueinander und eine über der anderen mit einem bestimmten gegenseitigen Abstand voneinander angeordnet sind.

6. Vorrichtung nach Patentanspruch 5, **dadurch gekennzeichnet, dass** die ersten Führungen (4) und die zweiten Führungen (5) identisch sind und aus einem Paar von Schienen (8) bestehen, verlegt in einem gleichbleibenden gegenseitigen Abstand voneinander, welche Schienen dazu bestimmt sind, die Räder (24) der Förderwagen (2) aufzunehmen.

7. Vorrichtung nach Patentanspruch 6, **dadurch gekennzeichnet, dass** die Mittel zum Versetzen von wenigstens einem Förderwagen (2) von den ersten Führungen (4) zu den zweiten Führungen (5) und von wenigstens einem Förderwagen (2) von den zweiten Führungen (5) zu den ersten Führungen (4) vertikale Versetzungsvorrichtungen (9) enthalten, welche Paare von Abschnitten (18) von Schienen (8) vertikal versetzen und positionieren können, von denen jeder so ausgelegt ist, dass er wenigstens einen Förderwagen (2) aufnehmen kann; wobei die vertikalen Versetzungsvorrichtungen (9) die Paare von Abschnitten (18) von Schienen (8) auf solche Weise vertikal versetzen und positionieren, dass die Abschnitte (18) in Positionen gebracht werden, in denen die Abschnitte (18) zur Verlängerung der ersten Führungen (4) und der zweiten Führungen (5) werden.

8. Vorrichtung nach Patentanspruch 7, **dadurch gekennzeichnet, dass** jede vertikale Versetzungsvorrichtung (9) zwei Paar von ringförmig gewundenen Ketten (12) enthält, die um Zahnräder (13) laufen, welche einander zugewandt angeordnet sind, und mit den Paaren von Abschnitten (18) von Schienen (8) an den Ketten (12) befestigt.

9. Vorrichtung nach Patentanspruch 8, **dadurch gekennzeichnet, dass** die Paare von Abschnitten (18) von Schienen (8) an den jeweiligen Paaren von Ketten (12) mit einem Abstand befestigt sind, welcher genau der gleiche ist wie der Abstand zwischen den ersten Führungen (4) und den zweiten Führungen (5), und welcher einer Anzahl von Schritten der Ketten (12) entspricht, die gleich der Anzahl von Zähnen an den Zahnrädern (13) ist, um welche sich eine Kette (12) der beiden Ketten ringförmig windet.

10. Vorrichtung nach einem beliebigen der Patentansprüche 7, 8 oder 9, **dadurch gekennzeichnet, dass** die Mittel zum Bewegen der Förderwagen (2), die in der Lage sind, gleichzeitig wenigstens einen Förderwagen (2) des ersten Zuges und wenigstens einen Förderwagen (2) des zweiten Zuges zu betätigen, um synchronisierte Verschiebungen entlang der ersten Führungen (4) und der zweiten Führungen (5) zu bewirken, welche synchronisierten Verschiebungen von gleichem Umfang sind und in entgegengesetzte Richtungen gehen, zwei bewegliche Gruppen (10) enthalten, ausgestattet mit Klinken (11) zum Ankuppeln der Förderwagen (2) und gehalten an zwei parallelen, sich gegenüberliegenden Strecken eines ringförmig gewundenen Bandes, welches auf einen Befehl hin wechselweise bewegt wird.

11. Vorrichtung nach Patentanspruch 10, **dadurch gekennzeichnet, dass** die Klinken (11) dazu bestimmt sind, mit Anschlägen (25) zusammenzuwirken, die an den Förderwagen (2) vorgesehen sind; wobei die Klinken (11) dazu bestimmt sind, die Anschläge (25) nur während eines aktiven Laufs der wechselweisen Bewegung des Klinken (11) zu greifen, welcher der Verschiebung um einen Schritt, synchron und in entgegengesetzten Richtungen, des ersten Zuges und des zweiten Zuges von Förderwagen (2) entlang der ersten Führungen (4) und der zweiten Führungen (5) und der entsprechenden Paare von zu diesen ausgerichteten Abschnitten (18) von Schienen (8) entspricht.

## Revendications

1. Un dispositif de transport le long d'une chaîne de travail de plaques de marbre, de carreaux et similaires, la chaîne étant constituée d'une succession ordonnée de stations de travail disposées à une distance prédéterminée l'une par rapport à l'autre, comprenant:
- une pluralité de charriots (2), chacun desquels pouvant recevoir au moins un carreau (3); des moyens pour accoupler les charriots (2) permettant à un charriot (2) d'être accouplé à un autre charriot consécutif pour former un train de charriots (2);
- des premiers guides (4) pour guider un nombre prédéterminé de charriots (2) accouplés l'un à l'autre pour former un train de charriots (2) le long de la chaîne (1);
- des seconds guides (5) pour guider un nombre prédéterminé de charriots accouplés l'un à l'autre pour former un second train de charriots (2) le long d'une chaîne de retour (6) des charriots (2);
- des moyens pour translater au moins un charriot (2) des premiers guides (4) aux seconds guides (5) et pour translater au moins un charriot (2) des seconds guides (5) aux premiers guides (4);
- des moyens pour déplacer les charriots (2) pour opérer dans le même temps sur au moins un charriot (2) du premier train de charriots (2) et au moins un charriot (2) du second train de charriots (2) de manière à produire, le long du premier guide (4) et du second guide (5), des déplacements synchronisés de quantités égales dans des directions opposées.

2. Le dispositif de la revendication 1, **caractérisé en ce que** chaque charriot (2) est pourvu d'un plan d'appui pour recevoir au moins un carreau (3), lequel plan d'appui est identifié par des extrémités libres d'une pluralité d'éléments parallèles (21) prédisposés et distancés de manière à identifier des canaux parallèles à un axe longitudinal du charriot (2), dans lesquels canaux peuvent être librement insérés et désinsérés des tapis roulants (7).

3. Le dispositif de la revendication 2, **caractérisé en ce que** les moyens d'accouplement comprennent, sur l'une des deux extrémités, antérieure ou postérieure, du charriot (2), un pivot (22) ayant un axe perpendiculaire à l'axe longitudinal du charriot (2), et sur l'extrémité opposée, antérieure ou postérieure, du charriot, un logement (23) pour un accouplement par emboîtement avec le pivot (22) d'un charriot (2) contigu; le logement (23) étant symétrique par rapport à un plan médian contenant l'axe longitudinal du pivot (22) et présentant une conformation qui diverge dans une direction vers l'extérieur, avec la section minimum disposée dans le plan médian; ladite section minimum étant dimensionnée pour réaliser un accouplement par emboîtement avec un pivot (22).

4. Le dispositif de la revendication 3, **caractérisé en ce que** les premiers guides (4) et les seconds guides (5) sont de longueur identique de manière à ce qu'un nombre identique de charriots (2) formant des trains puisse être reçu.

5. Le dispositif de la revendication 3 ou 4, **caractérisé en ce que** les premiers guides (4) et les seconds guides (5) sont parallèles et disposés l'un sur l'autre à une distance réciproque prédéterminée.

6. Le dispositif de la revendication 5, **caractérisé en ce que** les premiers guides (4) et les seconds guides (5) sont identiques et constitués d'une paire de rails profilés (8) disposés à une distance constante réciproque, lesquels rails sont conçus pour recevoir les roues (24) des charriots (2).

7. Le dispositif de la revendication 6, **caractérisé en ce que** les moyens pour translater au moins un charriot (2) des premiers guides (4) aux seconds guides (5) et au moins un charriot (2) des seconds guides (5) aux premiers guides (4) comprennent des élévateurs (9) pouvant translater et positionner verticalement des couples de portions de rails (8), chacun d'entre eux étant proportionné pour accueillir au moins un charriot (2); les élévateurs verticaux (9) translatant et positionnant des paires de portions (18) de rails (8) de manière à porter les portions (18) dans des positions dans lesquelles les portions (18) deviennent des prolongations des premiers guides (4) et des seconds guides (5).

8. Le dispositif de la revendication 7, **caractérisé en ce que** chaque élévateur vertical (9) comprend deux paires de chaînes fermées (12) s'enroulant autour de pignons dentés (13) disposés l'un en face de l'autre, avec les paires de portions (18) de rails (8) fixées sur les chaînes (12).

9. Le dispositif de la revendication 8, **caractérisé en ce que** les paires de portions (18) de rails (8) sont fixées aux respectives paires de chaînes (12) à une distance exactement égale à une distance entre les premiers guides (4) et les seconds guides (5) et qui correspond à un nombre de pas des chaînes (12) égal à un nombre de dents du pignon denté (13) autour duquel une chaîne (12) des chaînes est enroulée.

10. Le dispositif de n'importe laquelle des revendications 7, 8 ou 9, **caractérisé en ce que** les moyens pour déplacer les charriots (2) peuvent agir dans le même temps sur au moins un charriot (2) du premier train de charriot et au moins un charriot (2) du second train de manière à synchroniser les déplacements le long des premiers guides (4) et des seconds guides (5), lesquels déplacements synchronisés sont de même entité et dans des directions opposées, comprennent deux groupes mobiles (10) équipés de rochets (11) pour l'accrochage de charriots (2) et fixés à deux branches parallèles opposées d'une courroie fermée mise en mouvement alternativement sur commande.

11. Le dispositif selon la revendication 10, **caractérisé en ce que** les rochets (11) sont conçus pour interagir avec des butées (25) prévues sur les charriots (2); les rochets (11) étant prédisposés pour s'engager sur les butées (25) seulement pendant une course active du mouvement alternatif des rochets (11), correspondant à un déplacement d'un pas, synchronisé et dans des directions opposées, du premier train et du second train de charriots (2) le long des premiers guides (4) et des seconds guides (5) et des correspondantes paires de portions (18) de rails (8) qui leur sont parallèles.
